# EUROPÄISCHE PATENTSCHRIFT

(11) **EP 2 752 378 B1**
(45) Veröffentlichungstag und Bekanntmachung des Hinweises auf die Patenterteilung: **16.12.2015**
(21) Anmeldenummer: 13197990.8
(22) Anmeldetag: 18.12.2013
(51) Int. Cl.: B65G 17/20

(54) **Kettenglied einer Förderkette, Förderkette einer Fördervorrichtung und Fördervorrichtung**
Chain link of a conveyor chain, conveyor chain of a conveyor device and conveyor device
Maillon d'une chaîne à raclettes, chaîne à raclettes d'un dispositif de transport et dispositif de transport

(30) Priorität: 08.01.2013 DE 102013100132
(43) Veröffentlichungstag der Anmeldung: 09.07.2014
(73) Patentinhaber: SDI Group Germany Material Handling Solutions GmbH, 33609 Bielefeld (DE)
(72) Erfinder: OTTO Thomas, 33659 Bielefeld (DE)
(74) Vertreter: Kleine, Hubertus

(56) Entgegenhaltungen:
- EP-A2- 2 363 358
- WO-A1-2008/135088
- DE-U1- 20 110 857
- DE-U1-202008 007 100

## Beschreibung

Die vorliegende Erfindung betrifft ein Kettenglied einer Förderkette einer Fördervorrichtung zur Beförderung von an Halteadaptern hängenden Gegenständen gemäß dem Oberbegriff des Anspruchs 1 sowie eine Förderkette und eine Fördervorrichtung.

Ein gattungsgemäßes Kettenglied einer Förderkette einer Fördervorrichtung ist beispielsweise aus der DE 10 2010 053 426 B3 bekannt, wobei die Fördervorrichtung ebenfalls eine von Reibrollen angetriebene, aus mehreren solcher Kettenglieder bestehende Förderkette aufweist. Die Kettenglieder sind dabei über eine schwenkbare Verbindung miteinander verbunden. An der Unterseite der Kettenglieder ragen senkrecht nach unten und senkrecht zur Förderrichtung ausgerichtete Schubkörper in Gestalt von Mitnehmerstegen hervor, mit denen Adapter und damit die an diesen hängenden Gegenstände wie beispielsweise Taschen oder Kleidungsstücke wie Hemden oder Jacken in Förderrichtung verschoben werden.

Problematisch ist der Einsatz solcher gattungsgemäßer Kettenglieder bzw. Förderketten in solchen Bereichen einer Fördervorrichtung, bei denen ein Aufstauen der Halteadapter ermöglicht sein muss.

Aus der DE 20 2008 007 100 U1 ist eine Hängeförderanlage mit von Reibrollen angetriebenen Kettengliedern bekannt, bei der an der Unterseite der Kettenglieder mithilfe von Schwenkhebeln um eine horizontale Achse verschwenkbare Schubkörper montiert sind. DE 20 2008 007 100 U1 beschreibt ein Kettenglied gemäß dem Oberbegriff des Anspruchs 1.

Aufgabe der vorliegenden Erfindung ist es, ein einfach und kostengünstig herstellbares Kettenglied einer Förderkette einer Fördervorrichtung zur Beförderung von an Halteadaptern hängenden Gegenständen sowie eine aus solchen Kettengliedern bestehende Förderkette und eine Fördervorrichtung bereitzustellen, mit der ein zu verlässiges Befördern der Halteadapter und ein problemloses Aufstauen der Halteadapter an vorbestimmten Stellen der Fördervorrichtung ermöglicht ist.

Diese Aufgabe wird durch ein Kettenglied mit den Merkmalen des Anspruchs 1, durch eine Förderkette mit den Merkmalen des Anspruchs 7 sowie durch eine Fördervorrichtung mit den Merkmalen des Anspruchs 9 gelöst.

Das erfindungsgemäße Kettenglied zeichnet sich dadurch aus, dass der Schubkörper vertikal elastisch durch mehrere Federelemente mit dem Basiskörper des Kettengliedes verbunden ist, wobei das den Basiskörper, den Schubkörper und die Federelemente aufweisende Kettenglied einstückig ausgebildet ist.

Durch die elastische Anbindung des Schubkörpers an den Basiskörper des Kettengliedes kann im Moment einer Aufstauung von Halteadaptern an einer vorbestimmten Stelle einer Fördervorrichtung der Schubkörper in einfacher Weise nach oben gegen den Basiskörper gedrückt werden, so dass das Kettenglied der Förderkette über den Halteadapter hinweggleitet, so dass weitere Gegenstände, die an Halteadaptern an den Kettengliedern der Förderkette angeordnet sind, problemlos weiterbefördert werden können.

Vorteilhafte Ausführungsvarianten der Erfindung sind Gegenstand der Unteransprüche.

Gemäß einer vorteilhaften Ausführungsvariante der Erfindung sind die quer zur Förderrichtung ausgerichteten, in Förderrichtung hinteren Ränder der mindestens einen Ausnehmung des Schubkörpers stumpfwinklig zur sich parallel zur Förderrichtung ausgerichteten Unterseite des Schubkörpers ausgerichtet, so dass durch Anhalten eines Halteadapters an einer vorbestimmten Position der Fördervorrichtung der Schubkörper rampenartig nach oben in Richtung des Basiskörpers gedrückt wird.

Gemäß einer weiteren bevorzugten Ausführungsvariante sind die Federelemente als den Basiskörper mit dem Schubkörper schrägwinklig miteinander verbindende Federblätter ausgebildet. Die Ausbildung der Federelemente in Gestalt solcher Federblätter oder Federstreifen sind einfach und kostengünstig herstellbar.

Der von den Federelementen mit dem Basiskörper bzw. mit dem Schubkörper eingeschlossene Winkel beträgt dabei bevorzugt zwischen 5° und 30°. Durch die möglichst flache Verbindung ist ein Anheben der Schubkörper beim Aufstauen der Adapter an einer vorbestimmten Position erheblich erleichtert. Dadurch ist auch der sich dabei bildende Staudruck aufgrund nachfolgender Adapter sehr klein, wodurch beispielsweise ein Verknittern der mit den Adaptern geführten Kleidungsstücke vermieden wird.

Bei der aus mehreren solchen Kettengliedern bestehenden Förderkette sind gemäß einer bevorzugten Ausführungsvariante an in Förderrichtung voneinander beabstandeten Enden des Schubkörpers Überlappungsabschnitte zur Verbindung mit einem benachbarten Schubkörper eines Kettengliedes angeformt.

Dadurch wird insbesondere erreicht, dass beim Anheben eines in Förderrichtung vorderen Schubkörpers durch einen aufgestauten Halteadapter auch der nachfolgende Schubkörper teilweise mit angehoben wird, wodurch die Reibung des nachfolgenden Schubkörpers an dem aufgestauten Halteadapter verringert wird.

Bei der erfindungsgemäßen Fördervorrichtung sind gemäß einer bevorzugten Ausführungsvariante an dem Kopfteil der Halteadapter in dem Schienenprofil rollbare Laufrollen gelagert, wobei das Kopfteil ein die Laufrollen überragendes Kupplungsstück aufweist, das im eingekuppelten Zustand mit dem Schubkörper formschlüssig in eine der Ausnehmungen des Schubkörpers aufgenommen ist, wobei die formschlüssige Verbindung zwischen dem Schubkörper und dem Kupplungsstück des Halteadapters so geformt ist, dass ab einer vorbestimmten Krafteinwirkung des Kupplungsstücks des Halteadapters auf den Schubkörper der Schubkörper in Richtung des Basiskörpers des jeweiligen Kettenglieds der Förderkette einfederbar ist, wobei dabei die Verbindung zum Halteadapter lösbar ist. Mit dem derart ausgebildeten Kopf der Halteadapter ist ein reibungsarmes Lösen der Halteadapter aus dem Eingriff mit dem Schubkörper des Kettenglieds ermöglicht.

Nachfolgend werden bevorzugte Ausführungsvarianten der Erfindung anhand der beigefügten Zeichnungen näher erläutert. Es zeigen:
- Figur 1: eine schematische Seitenansicht eines Ausschnitts einer Fördervorrichtung mit Darstellung von Kettengliedern einer Förderkette und mit diesen in Verbindung stehenden Halteadaptern,
- Figur 2: eine Schnittansicht durch die Fördervorrichtung gemäß Figur 1,
- Figur 3: eine perspektivische Ansicht zweier miteinander verbundener Ausführungsvarianten von erfindungsgemäßen Kettengliedern,
- Figuren 4 - 6: weitere unterschiedliche Ansichten auf die in Figur 3 gezeigten Kettenglieder,
- Figur 7: eine Schnittansicht durch das Kettengliederpaar entlang einer in Figur 6 gezeigten Schnittlinie,
- Figuren 8 und 9: perspektivische Ansichten eines Halteadapters und
- Figur 10: eine Seitenansicht auf den Halteadapter aus den Figuren 8 und 9.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Kettengliedes, der Kette, der Halteadapter und dergleichen. Durch verschiedene Arbeitsstellungen oder die spiegelsymmetrische Auslegung oder dergleichen können sich diese Bezüge ändern.

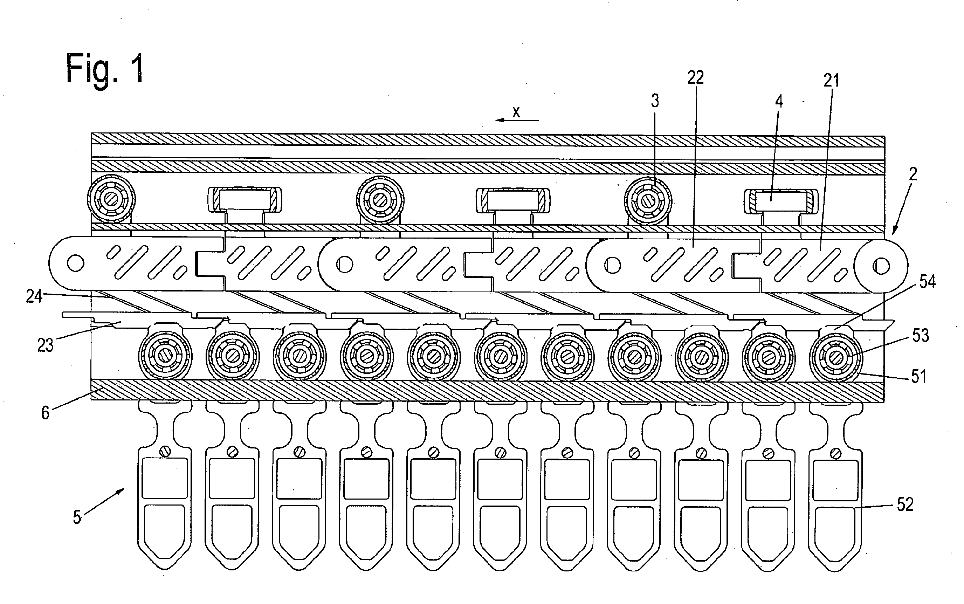

In der Figur 1 ist mit dem Bezugszeichen 2 insgesamt eine Förderkette einer Fördervorrichtung bezeichnet, die aus mehreren Kettengliedern 21, 22 besteht, die untereinander gelenkig miteinander verbunden sind und die in eine Schienenprofil 6 einer hier nur ausschnittsweise dargestellten Fördervorrichtung mit Reibrollenantrieb in eine Verschieberichtung X bewegbar aufgenommen ist und die zur Beförderung von Gegenständen wie insbesondere Kleidungsstücke dient, die beispielsweise an Bügeln aufgehängt werden, wobei die Bügel jeweils in einen Halteadapter 5 eingehängt sind, welcher mithilfe der Förderkette 2 in der Fördervorrichtung befördert wird.

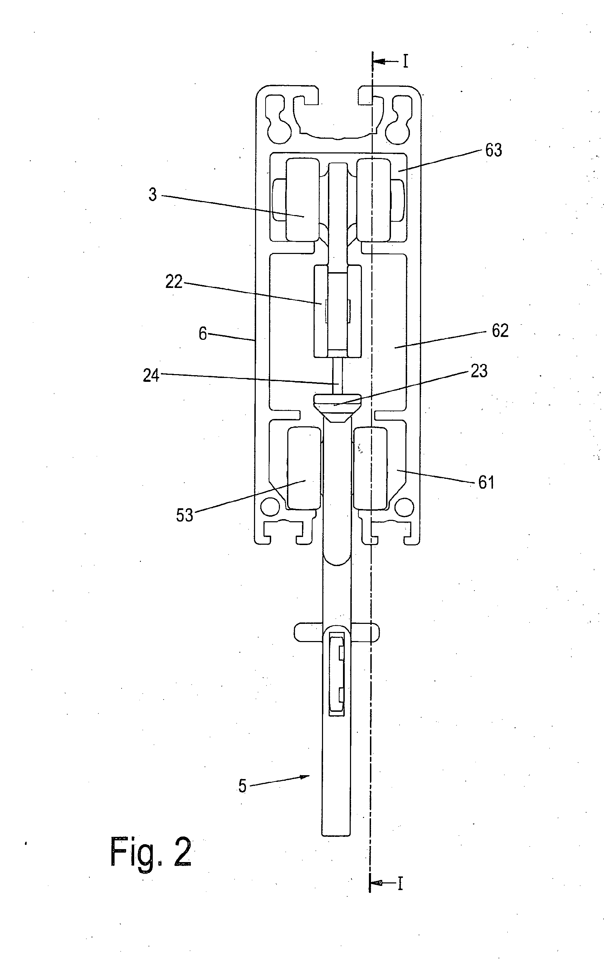

Zur Führung der Förderkette 2 in dem Schienenprofil 6 sind an jedem der Kettenglieder 21, 22 ein Laufrad 3 oder ein Führungsrad 4 angeordnet, die in einen oberen Hohlraum 63 des Schienenprofils aufgenommen sind, wobei die Laufrollen 3, wie in Figur 2 gut zu erkennen ist, auf jeweiligen Stegen des Laufprofils 6 aufliegen und in Förderrichtung X in dem Schienenprofil verfahrbar sind. Die Figur 1 zeigt dabei die in dem Laufprofil 6 geführte Förderkette 2 entlang eines in figur 2 eingezeichneten Schnittes I - I.

Die Basiskörper 211, 221 der Kettenglieder 21, 22 sowie die an einer Unterseite des Basiskörpers 211, 221 angeformten Schubkörper 23 laufen dabei in einem mittleren Hohlraum 62 des Schienenprofils 6, während ein Kopfteil 51 eines Halteadapter 5 in einem unteren Hohlraum 61 des Schienenprofils 6 angeordnet ist, wobei das Kopfteil 51 der Halteadapter 5 mit Laufrollen 53 versehen ist, die auf einem Steg des Schienenprofils 6 laufen.

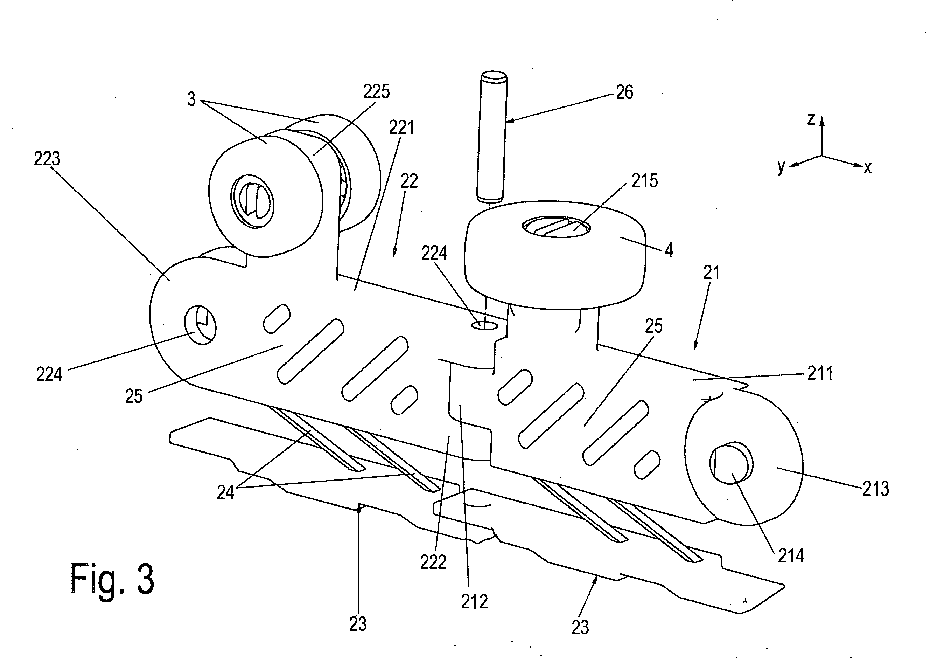

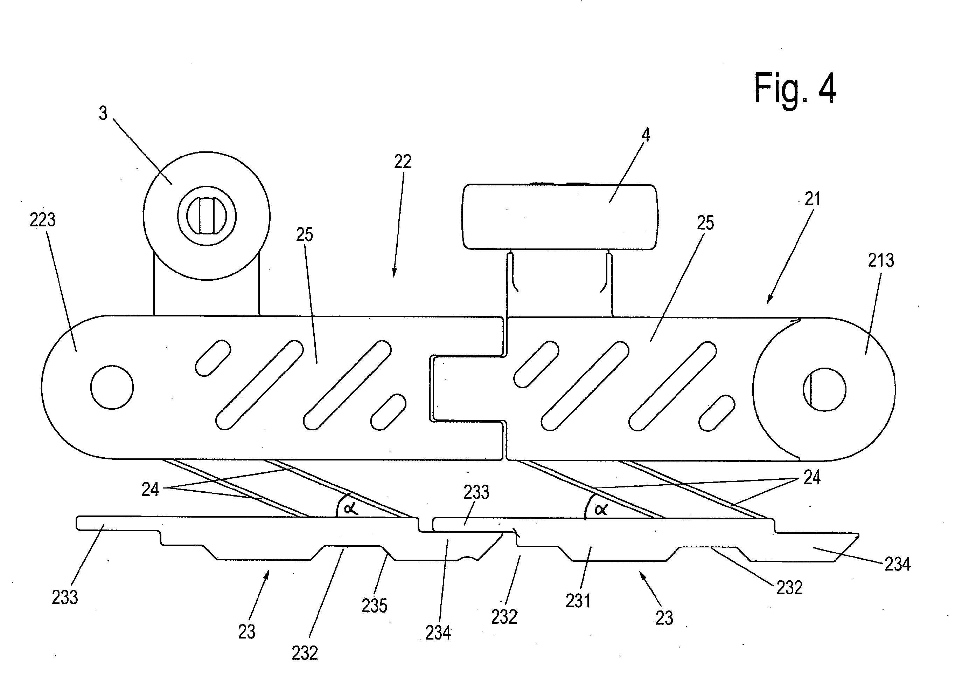

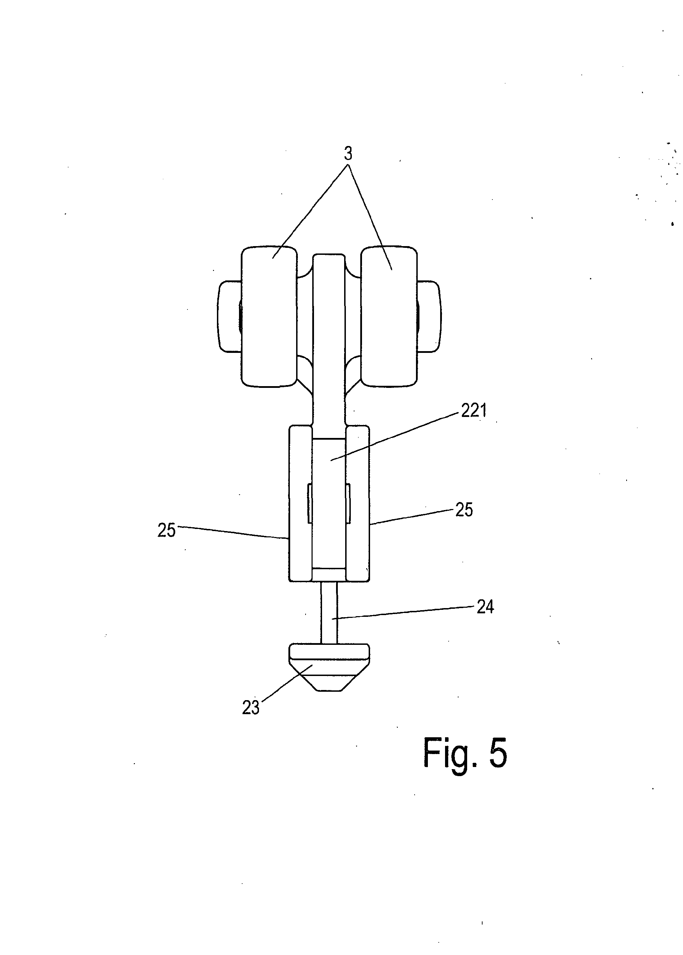

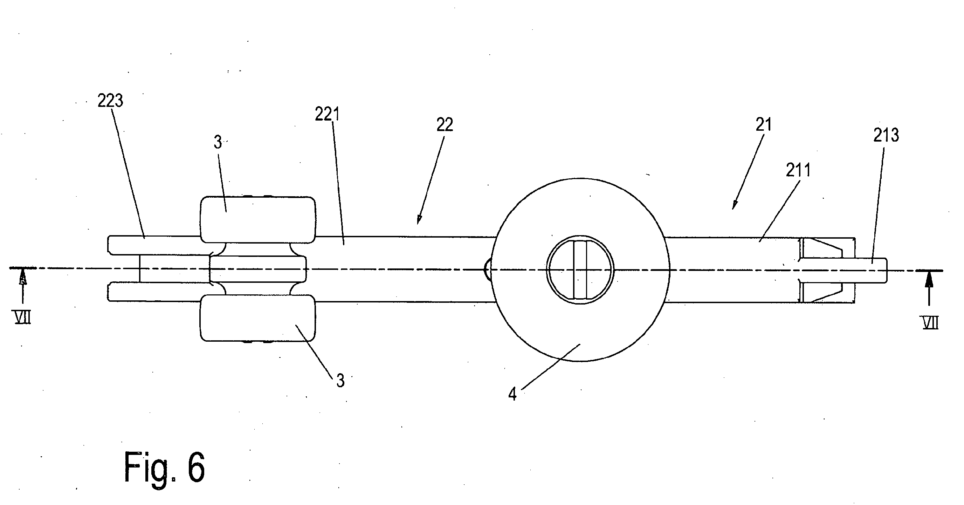

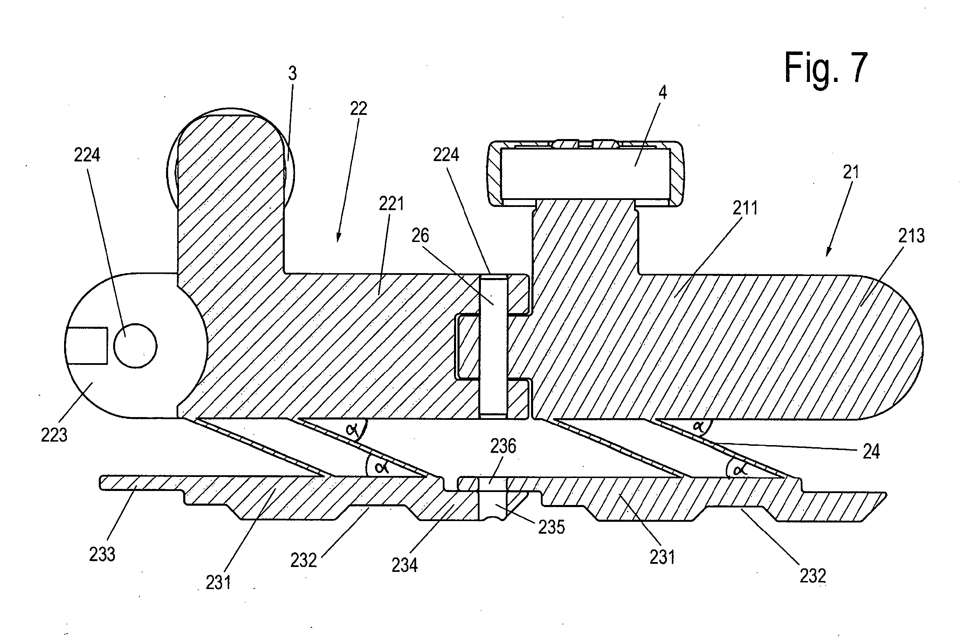

Ein Paar von Kettengliedern 21, 22 sind im Detail in den Figuren 3-7 dargestellt. Wie in den Figuren 3 und 4 gut zu erkennen ist, weist jedes der Kettenglieder 21, 22 einen Basiskörper 211, 221 auf. Die Seitenwände der Basiskörper 211, 221 sind dabei als Reibrollenandrückflächen 25 ausgebildet, an die an einer oder mehreren vorbestimmten Positionen der Fördervorrichtung Antriebsrollen (nicht gezeigt) angedrückt werden und dadurch die Förderkette 2 in Bewegung versetzen.

Unterhalb der Basiskörper 211, 221 sind an einer Unterseite der Basiskörper 211, 221 Schubkörper 23 angeordnet, wobei jeweils ein Schubkörper 23 vertikal elastisch mit einem der Basiskörper 211, 221 verbunden ist.

Zur Beförderung der Halteadapter 5 ist auf einer Unterseite des Schubkörpers 23 mindestens eine Ausnehmung 232 zur formschlüssigen Aufnahme eines Koppelstückes 54 des Kopfteils 51 des Halteadapters 5 vorgesehen. Diese Ausnehmungen 232 sind dabei bevorzugt mit einer zur Unterseite, d.h. dem Halteadapter 5 zugewandten Seite parallelen Fläche ausgebildet, die an den quer zur Förderrichtung ausgerichteten, in Förderrichtung X hinteren Rändern 235 stumpfwinklig zur sich parallel zur Förderrichtung X ausgerichteten Unterseite der Schubkörper 23 erheben.

Dadurch können bei einer Aufstauung eines oder mehrerer Halteadapter 5 das Koppelstück 54 des Kopfteils 51 aus der Ausnehmung 232 der Schubkörper 23 rampenartig herausgleiten und so die Förderverbindung zwischen dem Halteadapter 5 und dem jeweiligen Kettenglied 21, 22 der Förderkette 2 trennen. Bei diesem Trennvorgang wird der Schubkörper 23 um die Tiefe der Ausnehmung 232 in Richtung des Basiskörpers 211, 221 des jeweiligen Kettenglieds 21, 22 nach oben gedrückt, was durch die vertikale elastische Verbindung des Schubkörpers 23 mit dem Basiskörper 211, 221 ermöglicht ist.

Die elastische Verbindung des Schubkörpers 23 mit dem Basiskörper 211, 221 erfolgt dabei durch mehrere Federelemente 24, die bevorzugt als den Basiskörper 211, 221 mit dem Schubkörper 23 schrägwinklig miteinander verbindende Federblätter ausgebildet sind.

Der von den Federelementen 24 mit dem Basiskörper 211, 221 bzw. mit dem Schubkörper 23 eingeschlossene Winkel α beträgt dabei bevorzugt zwischen 5° und 30°, besonders bevorzugt zwischen 5° und 15°. Durch die möglichst flache Verbindung ist ein Anheben der Schubkörper 23 beim Aufstauen der Halteadapter 5 an einer vorbestimmten Position erheblich erleichtert. Dadurch ist auch der sich dabei bildende Staudruck aufgrund nachfolgender Halteadapter 5 sehr klein, wodurch beispielsweise ein Verknittern der mit den Halteadapter 5 geführten Kleidungsstücke vermieden wird. Außerdem ist durch die flache Anbindung der Federelementen 24 mit dem Basiskörper 211, 221 bzw. mit dem Schubkörper 23 ermöglicht, die als Federblätter ausgebildeten Federelemente 24 relativ dickwandig auszubilden, was die Stabilität der Kettenglieder zusätzlich erhöht.

Jedes der Kettenglieder 21, 22 ist dabei einstückig ausgebildet, beispielsweise als Spritzgussteil hergestellt.

Um das Herausgleiten der Halteadapter 5 aus den Ausnehmungen 232 des Schubkörpers 23 weiter zu erleichtern, sind die an den einzelnen Kettengliedern 21, 22 angeordneten Schubkörper 23 mit Überlappungsabschnitten 233, 234 versehen, so dass benachbarte Schubkörper 23 zweier Kettenglieder 21, 22 sich an jeweils einem Überlappungsabschnitt 233, 234 überlappen.

Die Überlappungsabschnitte 233, 234 zur Verbindung einander benachbarter Schubkörper 23 sind dabei so ausgebildet, dass ein Überlappungsabschnitt 234 eines in Förderrichtung vorderen Schubkörpers 21, 22 den mit diesen überlappenden Überlappungsabschnitt 233 eines in Förderrichtung nachfolgenden Schubkörpers 21, 22 untergreift.

Die einzelnen Kettenglieder 21, 22 sind schwenkbar miteinander verbunden. Vorzugsweise ist dazu an einem ersten Ende des Basiskörpers 211 eines der Kettenglieder 21 ein Koppelstück 212 zur Verschwenkung in einer XY-Ebene angeformt, das mit einem entsprechenden Koppelstück 222 des benachbarten Kettenglieds 22 und einen Stift 26 ein Drehgelenk bildet. Das andere Ende des Basiskörpers 211 des ersten Kettenglieds 21 ist bevorzugt als Koppelungsstück 213 zur Schwenkbewegung in einer XZ-Ebene ausgebildet, das mit einem entsprechend geformten Koppelungsstück 223 des Basiskörpers 221 des zweiten Kettenglieds 22 unter einer Drehachse 214 ein weiteres Drehgelenk bildet.

Um bei der Montage oder im Falle einer Reparatur einen einfachen Zugriff auf den Stift 26 der in der XY-Ebene schwenkbaren Verbindung der Kettenglieder 21, 22 zu ermöglichen, sind in den Überlappungsabschnitten 233, 234 bevorzugt einander überlappende Bohrungen 235, 236 vorgesehen, durch die der Stift 26 von unten erreichbar ist.

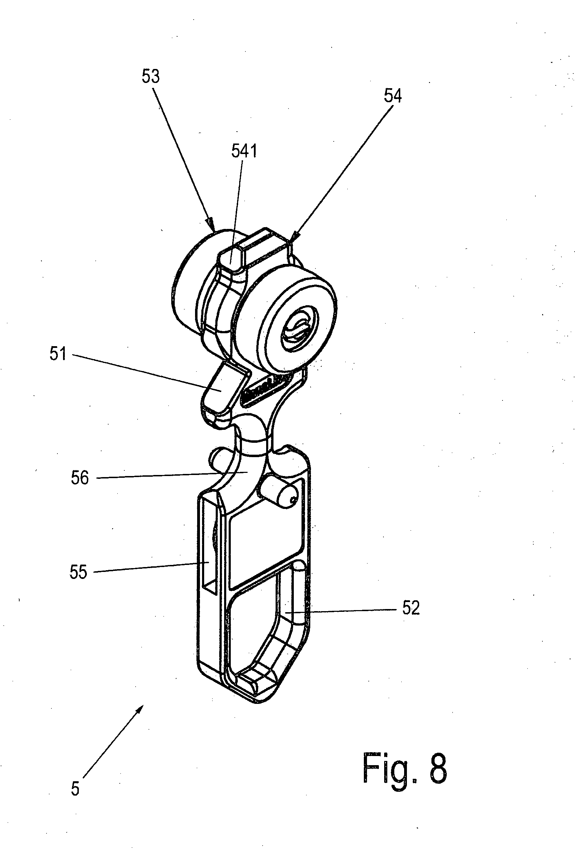

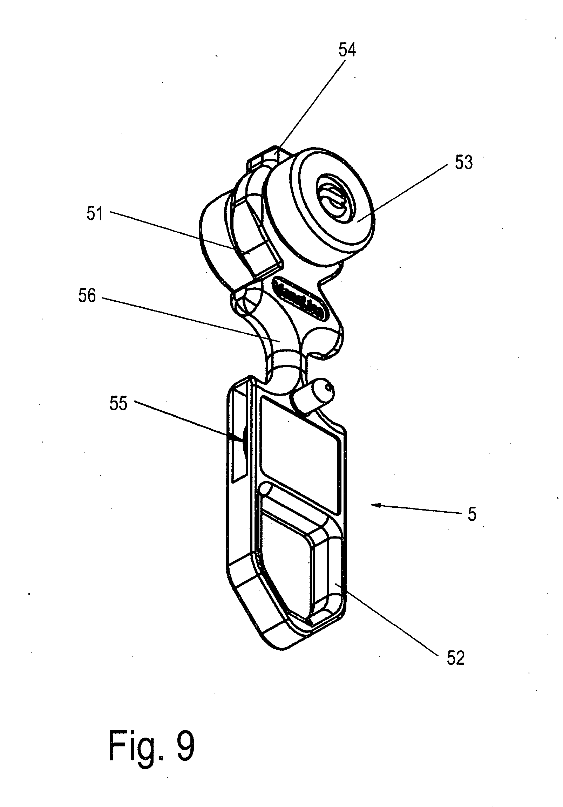

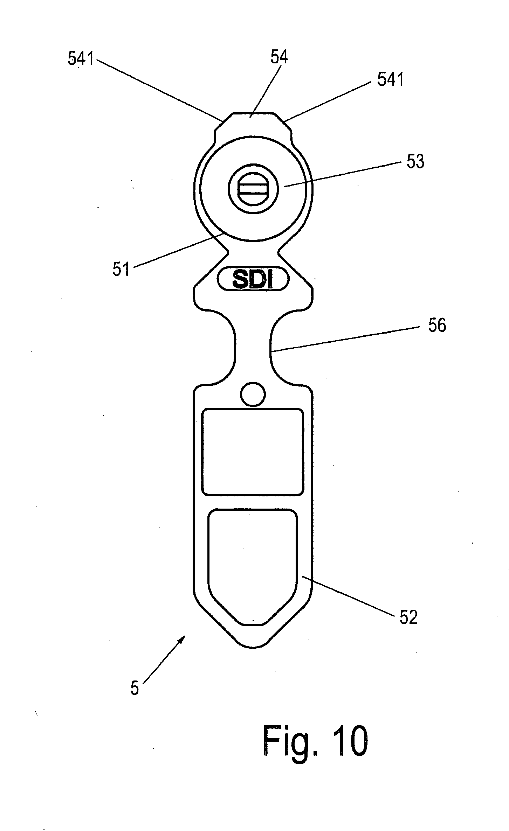

In den Figuren 8 bis 10 ist eine Ausführungsvariante eines Halteadapters 5 in unterschiedlichen Ansichten dargestellt. Wie insbesondere der Figur 8 zu entnehmen ist, besteht der Halteadapter 5 im Wesentlichen aus einem Kopfteil 51, an dem Laufrollen 53 gelagert sind, die in einem unteren Aufnahmebereich 63 des Schienenprofils 6 aufgenommen sind, sowie aus einem Aufnahmerahmen 52, in den beispielsweise ein Drahtbügel einhängbar ist. Der Aufnahmerahmen 52 ist dabei mit dem Kopfteil 51 über ein sich verjüngendes Halsteil 56 sowie einen darunter positionierten Aufnahmebereich 55 zum Einsetzen eines Identifikationsbauteils, beispielsweise eines RFID-Chips, verbunden.

Das Kopfteil 51 erstreckt sich dabei über die Laufrollen 53 hinweg nach oben und bildet ein die Laufrollen 53 überragendes Kupplungsstück 54, das im eingekuppelten Zustand mit dem Schubkörper 23 formschlüssig in eine der Ausnehmungen 232 des Schubkörpers 23 aufgenommen ist, wobei die formschlüssige Verbindung zwischen dem Schubkörper 23 und dem Kupplungsstück 54 des Halteadapters 5 so geformt ist, dass ab einer vorbestimmten Krafteinwirkung des Kupplungsstücks 54 des Halteadapters 5 auf den Schubkörper 23 der Schubkörper 23 in Richtung des Basiskörpers 211, 221 des jeweiligen Kettenglieds 21, 22 der Förderkette 2 einfederbar ist, wobei dabei die Verbindung zum Halteadapter 5 lösbar ist. Die quer zur Förderrichtung X verlaufenden Stirnflächen 541 des Adapterstücks 54 sind dabei abgeschrägt ausgebildet, so dass das Adapterstück 54 formschlüssig in der Ausnehmung 232 des Schubkörpers 23 einliegt und bei angehaltenem Halteadapter 5 der Schubkörper 23 über die Schrägflächen 541 nach oben gedrückt wird und dabei den Halteadapter 5 frei gibt.

## Patentansprüche

1. Kettenglied (21, 22) einer Förderkette (2) einer Fördervorrichtung zur Beförderung von an Halteadaptern (5) hängenden Gegenständen, aufweisend einen Basiskörper (211, 221) und einen an einer Unterseite des Basiskörpers (211, 221) angeformten Schubkörper (23), wobei der Basiskörper (211, 221) seitliche Reibrollenandrückflächen (25) aufweist, an die Reibrollen zum Antrieb der Förderkette (2) andrückbar sind, an in Förderrichtung (x) voneinander beabstandeten Enden des Basiskörpers (211, 221) angeformte Kupplungsabschnitte (212, 213, 222, 223) zur schwenkbaren Verbindung mit einem benachbarten Kettenglied (21, 22) sowie ein auf einer Oberseite des Basiskörpers (211, 221) angeformtes Lager (215, 225) zur Lagerung von Lauf- oder Führungsrollen (3, 4), wobei auf einer Unterseite des Schubkörpers (23) mindestens eine Ausnehmung (232) zur formschlüssigen Aufnahme eines Koppelstückes (54) eines Kopfteils (51) eines Halteadapters (5) zur Halterung eines zu befördernden Gegenstandes vorgesehen ist und der Schubkörper (22) vertikal elastisch mit dem Basiskörper (211, 221) verbunden ist, **dadurch gekennzeichnet, dass** der Schubkörper (23) vertikal elastisch mit dem Basiskörper (211, 221) durch mehrere Federelemente (24) verbunden ist, wobei das den Basiskörper (211, 221), den Schubkörper (23) und die Federelemente (24) aufweisende Kettenglied (21, 22) einstückig ausgebildet ist.

2. Kettenglied (21, 22) nach Anspruch 1, **dadurch gekennzeichnet, dass** die quer zur Förderrichtung ausgerichteten, in Förderrichtung (x) hinteren Ränder (235) der mindestens einen Ausnehmung (232) des Schubkörpers (23) stumpfwinklig zur sich parallel zur Förderrichtung (x) ausgerichteten Unterseite des Schubkörpers (23) ausgerichtet sind.

3. Kettenglied (21, 22) nach Anspruch 1 oder 2, **dadurch gekennzeichnet, dass** die Federelemente (24) als den Basiskörper (211, 221) mit dem Schubkörper (23) schrägwinklig miteinander verbindende Federblätter ausgebildet sind.

4. Kettenglied (21, 22) nach Anspruch 3, **dadurch gekennzeichnet, dass** der von einem der Federelemente (24) und dem Basiskörper (211, 221) bzw. dem Schubkörper (23) eingeschlossene Winkel (α) zwischen 5° und 30° beträgt.

5. Förderkette (2) einer Fördervorrichtung zur Beförderung von an Halteadaptern (5) hängenden Gegenständen mit mehreren schwenkbar miteinander verbundenen Kettengliedern (21, 22), **dadurch gekennzeichnet, dass** die Kettenglieder (21, 22) gemäß einem der vorstehenden Ansprüche ausgebildet sind.

6. Förderkette (2) nach Anspruch 5, **dadurch gekennzeichnet, dass** an in Förderrichtung (x) voneinander beabstandeten Enden des Schubkörpers (23) Überlappungsabschnitte (233, 234) zur Verbindung mit einem benachbarten Schubkörper (23) eines Kettengliedes (21, 22) angeformt sind.

7. Fördervorrichtung zur Beförderung von hängenden Gegenständen, aufweisend ein Schienenprofil (6), eine in dem Schienenprofil (6) in einer Förderrichtung (x) bewegbare, aus mehreren Kettengliedern (21, 22) bestehende Förderkette (2), Halteadapter (5) zur Halterung jeweils eines zu befördernden Gegenstandes, wobei jedes der Kettenglieder (21, 22) einen Basiskörper (211, 221) mit seitlichen Reibrollenandrückflächen (25) aufweist, an die Reibrollen zum Antrieb der Förderkette (2) andrückbar sind, sowie Schubkörper (23), die an einer Unterseite der Basiskörper (211, 221) angeformt sind, wobei die Halteadapter (5) jeweils ein in dem Schienenprofil (6) rollbar gelagertes Kopfteil (51) aufweisen, das mit jeweils einem der Schubelemente (23) koppelbar ist, **dadurch gekennzeichnet, dass** die Förderkette (2) gemäß einem der vorstehenden Ansprüche 5 bis 6 ausgebildet ist.

8. Fördervorrichtung nach Anspruch 7, **dadurch gekennzeichnet, dass** an dem Kopfteil (51) der Halteadapter (5) in dem Schienenprofil (6) rollbare Laufrollen (53) gelagert sind und das das Kopfteil (51) ein die Laufrollen (53) überragendes Kupplungsstück (54) aufweist, das im eingekoppelten Zustand mit dem Schubkörper (23) formschlüssig in einer der Ausnehmungen (232) des Schubkörpers (23) aufgenommen ist, wobei die formschlüssige Verbindung zwischen dem Schubkörper (23) und dem Kupplungsstück (54) des Halteadapters (5) so geformt ist, dass ab einer vorbestimmten Krafteinwirkung des Kupplungsstücks (54) des Halteadapter (5) auf den Schubkörper (23) der Schubkörper (23) in Richtung des Basiskörpers (211, 221) des jeweiligen Kettengliedes (21, 22) der Förderkette (2) einfederbar ist, wobei dabei die Verbindung zum Halteadapter (5) lösbar ist.

9. Fördervorrichtung nach Anspruch 8, **dadurch gekennzeichnet, dass** die Überlappungsabschnitte (233, 234) zur Verbindung einander benachbarter Schubkörper (23) so ausgebildet sind, dass ein Überlappungsabschnitt (234) eines in Förderrichtung vorderen Schubkörpers (21, 22) den mit diesem überlappenden Überlappungsabschnitt (233) eines in Förderrichtung nachfolgenden Schubkörpers (21, 22) untergreift.

10. Fördervorrichtung nach einem der Ansprüche 7 bis 9, **dadurch gekennzeichnet, dass** der Halteadapter (5) eine Aufnahme (55) für ein Identifikationsbauteil aufweist.

## Claims

1. A chain link (21, 22) of a transport chain (2) of a conveyor apparatus for conveying articles hanging from holding adapters(5), comprising a base body (211, 221) and a thrust member (23) integrally formed on a bottom side of the base body (211, 221), wherein the base body (211, 221) comprises lateral friction roller pressing surfaces (25), against which friction rollers can be pressed for driving the transport chain (2), coupling sections (212, 213, 222, 223) which are integrally formed on ends of the base body (211, 221) which are spaced from each other in the conveying direction (X) for the pivotable connection with an adjoining chain link (21, 22), and a bearing (215, 225) which is integrally formed on an upper side of the base body (211, 221) for supporting running or guide rollers (3, 4), wherein at least one recess (232) is provided on a bottom side of the thrust member (23) for accommodating in an interlocking manner a coupling element (54) of a head part (51) of a holding adapter (5) for holding an article to be conveyed, and the thrust member (23) is connected in a vertically elastic manner to the base body (211, 221), **characterized in that** the thrust member (23) is connected vertically elastically to the base body (211, 221) by several spring elements (24), wherein the chain link (21, 22) comprising the base body (211, 221), the thrust member (23) and the spring elements (24) is integrally formed.

2. A chain link (21, 22) according to claim 1, **characterized in that** the edges (235) of the at least one recess (232) of the thrust member (23), which edges are oriented transversely to the conveying direction and are situated at the rear in the conveying direction (X), are oriented at an obtuse angle in relation to the bottom side of the thrust member (23) which is oriented parallel to the conveying direction (X).

3. A chain link (21, 22) according to claim 1 or 2, **characterized in that** the spring elements (24) are formed as spring leaves which connect the base body (211, 221) to the thrust member (23) at an oblique angle to each other.

4. A chain link (21, 22) according to claim 3, **characterized in that** the angle (α) which is enclosed by one of the spring elements (24) and the base body (211, 221) or the thrust member (23) is between 5° and 30°.

5. A transport chain (2) of a conveyor apparatus for conveying articles hanging from holding adapters having several chain links (21, 22) which are pivotably connected to each other, **characterized in that** the chain links (21, 22) are formed according to one of the preceding claims.

6. A transport chain (2) according to claim 5, **characterized in that** overlapping sections (233, 234) are integrally formed at the ends of the thrust member (23) spaced from each other in the conveying direction (X) for connection with an adjoining thrust member (23) of a chain link (21, 22).

7. A conveyor apparatus for conveying hanging articles, comprising a rail profile (6), a transport chain (2) which can be moved in the rail profile (6) in a conveying direction (X) and consists of several chain links (21, 22), holding adapters (5) for holding one respective article to be conveyed, wherein each of the chain links (21, 22) comprises a base body (211, 221) with lateral friction roller pressing surfaces (25), against which friction rollers can be pressed for driving the transport chain (2), and thrust members (23) which are integrally formed on a bottom side of the base bodies (211, 221), wherein the holding adapters (5) respectively comprise a head part (51) which is rollably mounted in the rail profile (6) and which can be coupled to a respective one of the thrust elements (23), **characterized in that** the transport chain (2) is formed according to one of the preceding claims 5 to 6.

8. A conveyor apparatus according to claim 7, **characterized in that** rollable running rollers (53) are supported on the head part (51) of the holding adapters (5) in the rail profile (6) and the head part (51) comprises a coupling element (54) which protrudes beyond the running rollers (53) and which is accommodated in the coupled state with the thrust member (23) in an interlocking manner in one of the recesses (232) of thrust member (23), wherein the interlocking connection between the thrust member (23) and the coupling element (54) of the holding adapter (5) is formed in such a way that from a predetermined action of force of the coupling element (54) of the holding adapter (5) on the thrust member (23) the thrust member (23) is deflectable in the direction of the base body (211, 221) of the respective chain link (21, 22) of the transport chain (2), wherein the connection to the holding adapter (5) is releasable.

9. A conveyor apparatus according to claim 8, **characterized in that** the overlapping sections (233, 234) for connecting mutually adjoining thrust members (23) is formed in such a way that an overlapping section (234) of a thrust member (21, 22) which is leading in the conveying direction engages underneath the overlapping section (233) of a thrust member (21, 22) which overlaps therewith and trails in the conveying direction.

10. A conveyor apparatus according to one of the claims 7 to 9, **characterized in that** the holding adapter (5) comprises a mount (55) for an identification component.

## Revendications

1. Maillon (21, 22) d'une chaîne de transport (2) d'un dispositif de transport pour le transport d'objets suspendus à des adaptateurs de maintien (5), comportant un corps de base (211, 221) et un poussoir (23) formé sur une face inférieure du corps de base (211, 221), lequel corps de base (211, 221) présente des surfaces latérales d'appui de galets de friction (25) sur lesquelles des galets de friction servant à l'entraînement de la chaîne de transport (2) peuvent être appuyés, des sections de couplage (212, 213, 222, 223) formées à des extrémités du corps de base (211, 221) distantes l'une de l'autre dans le sens du transport (x) et servant à l'assemblage pivotant avec un maillon (21, 22) voisin, et un palier (215, 225) formé sur une face supérieure du corps de base (211, 221) pour supporter des galets de roulement ou de guidage (3, 4), au moins un renfoncement (232) étant prévu sur une face inférieure du poussoir (23) pour recevoir en correspondance de forme un élément de couplage (54) d'une partie de tête (51) d'un adaptateur de maintien (5) en vue du maintien d'un objet à transporter, et le poussoir (23) étant relié de façon élastique au corps de base (211, 221), **caractérisé en ce que** le poussoir (23) est relié avec une élasticité verticale au corps de base (211, 221) par plusieurs éléments de ressort (24), le maillon (21, 22) qui comporte le corps de base (211, 221), le poussoir (23) et les éléments de ressort (24) étant conçu d'un seul tenant.

2. Maillon (21, 22) selon la revendication 1, **caractérisé en ce que** les bords arrière (235) dans le sens du transport (x), orientés transversalement par rapport au sens du transport, de l'au moins un renfoncement (232) du poussoir (23) sont orientés selon un angle obtus par rapport à la face inférieure du poussoir (23) orientée parallèlement au sens du transport (x).

3. Maillon (21, 22) selon la revendication 1 ou 2, **caractérisé en ce que** les éléments de ressort (24) sont conformés comme des ressorts à lames reliant le corps de base (211, 221) au poussoir (23) selon un angle oblique.

4. Maillon (21, 22) selon la revendication 3, **caractérisé en ce que** l'angle (α) formé par les éléments de ressort (24) et le corps de base (211, 221) ou le poussoir (23) est compris entre 5° et 30°.

5. Chaîne de transport (2) d'un dispositif de transport pour le transport d'objets suspendus à des adaptateurs de maintien (5) avec plusieurs maillons (21, 22) reliés entre eux de façon pivotante, **caractérisée en ce que** les maillons (21, 22) sont conçus selon l'une des revendications précédentes.

6. Chaîne de transport (2) selon la revendication 5, **caractérisée en ce que** des sections de chevauchement (233, 234) sont formées à des extrémités du poussoir (23) éloignées l'une de l'autre dans le sens du transport (x) en vue de la liaison avec un poussoir (23) d'un maillon (21, 22) voisin.

7. Dispositif de transport pour le transport d'objets suspendus présentant un profilé de rail (6), une chaîne de transport (2) déplaçable dans le profilé de rail (6) dans un sens de transport (x) et composée de plusieurs maillons (21, 22), des adaptateurs de maintien (5) destinés à maintenir chacun un des objets à transporter, chacun des maillons (21, 22) comportant un corps de base (211, 221) avec des surfaces latérales d'appui de galets de friction (25) sur lesquelles des galets de friction servant à l'entraînement de la chaîne de transport (2) peuvent être appuyés et des poussoirs (23) formés sur une face inférieure du corps de base (211, 221), les adaptateurs de maintien (5) présentant chacun une partie de tête (51) supportée de façon à pouvoir rouler dans le profilé de rail (6), qui peut être couplée à l'un des poussoirs (23), **caractérisé en ce que** la chaîne de transport (2) est conçue selon l'une des revendications 5 à 6.

8. Dispositif de transport selon la revendication 7, **caractérisé en ce que** des galets de roulement (53) pouvant rouler dans le profilé de rail (6) sont supportés dans la partie de tête (51) des adaptateurs de maintien (5) et la partie de tête (51) présente un élément de couplage (54) dépassant des galets de roulement (53), qui est reçu en correspondance de forme, dans l'état couplé avec le poussoir (23), dans l'un des renfoncements (232) du poussoir (23), l'assemblage en correspondance de forme entre le poussoir (23) et l'élément de couplage (54) de l'adaptateurs de maintien (5) étant conformé de telle manière qu'à partir d'une application de force prédéterminée de l'élément de couplage (54) de l'adaptateur de maintien (5) sur le poussoir (23), le poussoir (23) peut céder de façon élastique en direction du corps de base (211, 221) du maillon (21, 22) correspondant de la chaîne de transport (2) et la liaison avec l'adaptateur de maintien (5) peut alors être défaite.

9. Dispositif de transport selon la revendication 8, **caractérisé en ce que** les sections de chevauchement (233, 234) sont conçues en vue de l'assemblage de poussoirs (23) voisins de telle manière qu'une section de chevauchement (234) d'un poussoir (21, 22) venant devant dans le sens du transport passe sous la section de chevauchement (233) qui la chevauche d'un poussoir (21, 22) suivant dans le sens du transport.

10. Dispositif de transport selon l'une des revendications 7 à 9, **caractérisé en ce que** l'adaptateur de maintien (5) présente un logement (55) pour un composant d'identification.
